# EUROPEAN PATENT SPECIFICATION

(11) **EP 2 806 517 B1**
(45) Date of publication and mention of the grant of the patent: **12.04.2023**
(21) Application number: 13168447.4
(22) Date of filing: 20.05.2013
(51) Int. Cl.: H02G 5/02, H02G 5/10, H01B 5/02, H02B 1/21

(54) **Bus bar for electrical power distribution**
Sammelschiene für Stromverteilung
Barre omnibus de distribution d'énergie électrique

(43) Date of publication of application: 26.11.2014
(73) Proprietor: ABB S.p.A., 20124 Milano (IT)
(72) Inventor: Benedetti, Pierceleste, 22030 Orsenigo (CO) (IT); Cagliani, Daniele, 23847 Molteno (LC) (IT); Tagliabue, Andrea, 20831 Seregno (MI) (IT)
(74) Representative: Giavarini, Francesco

(56) References cited:
- EP-A1- 0 681 355
- EP-A1- 2 495 832
- EP-A2- 2 400 610
- WO-A1-00/27007
- GB-A- 1 484 192

## Description

The present invention relates to a bus bar for electrical power distribution.

It is known that distribution switchboards for distributing electric power to a plurality of electrical devices, such as circuit breakers or other switching devices, use a system of mutually parallel bus bars.

Each one of the bars is electrically connected to a corresponding phase of the electric power supply mains; generally, the connection between the bus bars and the devices installed into the switchboard is provided by means of adapter conductors, such as for example laminae, which are shaped appropriately according to the type of device.

Bus bars, according to the functions that they are required to perform in the practical application, must have a few basic characteristics; in particular, they must have a simple and functional constructive structure which allows extreme flexibility in assembly and coupling to other conducting or insulating elements.

For example, it is traditionally known to use flat bars with a solid rectangular transverse cross-section.

It is also known to use bus bars whose transverse cross-sections are shaped so as to facilitate coupling to other bars or to supporting and/or insulation elements; these elements are used to fix the bus bars to supporting structures and to assist them in withstanding the electrodynamic stresses.

For example, shaped bus bars are known with a body having, on an upper side, two C-shaped slots for receiving therein corresponding fixing means; the lower side of these bus bars has a central portion, i.e. a portion extending over a corresponding portion between the two upper C-slots, which is constituted by a large thickness portion of conducting material. European patent application EP2495832 discloses a bus bar having a cross-section designed to limit the quantity of material necessary to transmit the current; the material is mainly located on the same side as the surface containing a groove for receiving fastening means, such groove having a flat bottom portion. EP 2495832 A1 discloses the preamble of claim 1. International patent application WO0027007 A1 discloses a bus bar with at least two slots.

In the current state of the art, the use of conventional bus bars has drawbacks.

One of the drawbacks is the fact that the bus bars heat significantly when current is flowing therethrough; this relevant dissipation of electric energy in form of heat limits the current conducting capability of the bus bars.

Furthermore, considering two know bus bars placed adjacent to each other, relevant electromagnetic forces are generated between such bus bars during the current flowing therethrough; these electromagnetic forces jeopardize the electrical conducting performances of the bus bars. This situation is particularly critical when a fault current is generated through the bus bars, such as a current due to a short-circuit; in particular, the generated electromagnetic forces limit the rated short-time current (I_{cw}) which the bus bars can bear.

The generated electromagnetic forces also imply the use of a great number of large dimensioned insulating supporting elements for the bus bars.

In light of above, at the current state of the art, although known solutions perform in a rather satisfying way, there is still reason and desire for further improvements.

Such desire is fulfilled by a bus bar for electric power distribution, comprising a body made of conducting material which longitudinally extends along a principal axis and which, seen in a transversal cross-section, has a first side and a second side transversally connected to each other by a third side and a fourth side. The body has, on the first side, at least a first slot and a second slot which are separated from each other and adapted for coupling with corresponding fixing means, the first slot having a first bottom portion from which a first lateral wall and a second lateral wall protrude transversally facing to each other, and the second slot having a second bottom portion from which a third lateral wall and a fourth lateral wall protrude transversally facing to each other, wherein each one of the first bottom portion and the second bottom portion comprises two substantially straight tracts which form an angle of less than 180° between them. The third lateral wall is adjacent to the second lateral wall along a transversal extension of the body with respect to the principal axis. The body has, on the second side, at least one cavity extending at least over a corresponding portion of the body which extends between the second and third lateral walls with an extension along a transversal axis which is larger than the distance (D1) between said second lateral wall and said third lateral wall, the at least one cavity being defined by two delimiting portions of the body which are arranged substantially transversal with respect to the bottom portions of the slots, and by a base portion interposed between such two delimiting portions.

Another aspect of the present disclosure is to provide a switchboard comprising at least one bus bar as the bus bars defined by the annexed claims and disclosed in the following description. Further characteristics and advantages will be more apparent from the description of exemplary, but non-exclusive, embodiments of the bus bar for electrical current distribution, illustrated only for non-limitative exemplary purposes in the accompanying drawings, wherein:
- figure 1 is a sectional view of a first bus bar according to the present disclosure;
- figures 2 and 3 are a sectional view and a perspective view, respectively, of a second bus bar according to the present disclosure;
- figure 4 is a sectional view of a third bus bar according to the present disclosure;
- figure 5 is a sectional view of a fourth bus bar not according to the present invention;
- figures 6 and 7 are a sectional view and a perspective view, respectively, of a fifth bus bar not according to the present invention;
- figures 8 and 9 are a sectional view and a perspective view, respectively, of a sixth bus bar according to the present disclosure;
- figures 10 and 11 are a sectional view and a perspective view, respectively, of a seventh bus bar according to the present disclosure;
- figures 12 and 13 are a sectional view and perspective view, respectively, of an eight bus bar according to the present disclosure; and
- figure 14 illustrates four adjacent bus bars as per figures 12 and 13, each one coupled to two corresponding insulating supporting elements.

It should be noted that in the detailed description that follows, identical or similar components, either from a structural and/or functional point of view, have the same reference numerals, regardless of whether they are shown in different embodiments; it should also be noted that in order to clearly and concisely describe the present invention, the drawings may not necessarily be to scale and certain features of the disclosure may be shown in somewhat schematic form. Further, when the term "adapted" (shaped/configured/etc...) is used herein while referring to any component as a whole, or to any part of a component, or to a whole combinations of components, or even to any part of a combination of components, it has to be understood that it means and encompasses the structure, and/or configuration and/or shape and/or positioning of the related component or part thereof, or combinations of components or part thereof, such term refers to. Further, the term "transversal" or "transversally" is used herein to describe the position of one or more first parts and/or components relative to other second parts and/or components, so as to encompass all the positions where such first parts and/or components are not parallel with respect to the other second parts and/or components; hence, the meaning of "transversal" or "transversally" is not in any way herein limited to the particular case where such first parts and/or components are perpendicular to the second parts and/or components.

With reference to the above cited figures, the present disclosure is related to a bus bar 1 for electric power distribution, comprising a body made of conducting material, for example copper or aluminum, which longitudinally extends along a principal axis 100.

The body, seen in a transversal section with respect to the principal axis 100, has a first side 40 and a second side 41 which are transversally connected to each other by a third side 42 and a fourth side 43.

The body of the bus bar 1 has, on the side 40, at least a first slot 3 and a second slot 4 which are separated from each other and which are adapted for coupling with corresponding means for fixing the bus bar 1 to other elements and/or components, such as other bus bars 1 or supporting structures.

The slot 3 has a bottom portion 5 from which a lateral wall 6 and a lateral wall 7 protrude transversally facing to each other, and the second slot 4 has a bottom portion 10 from which a lateral wall 11 and a lateral wall 12 protrude transversally facing to each other.

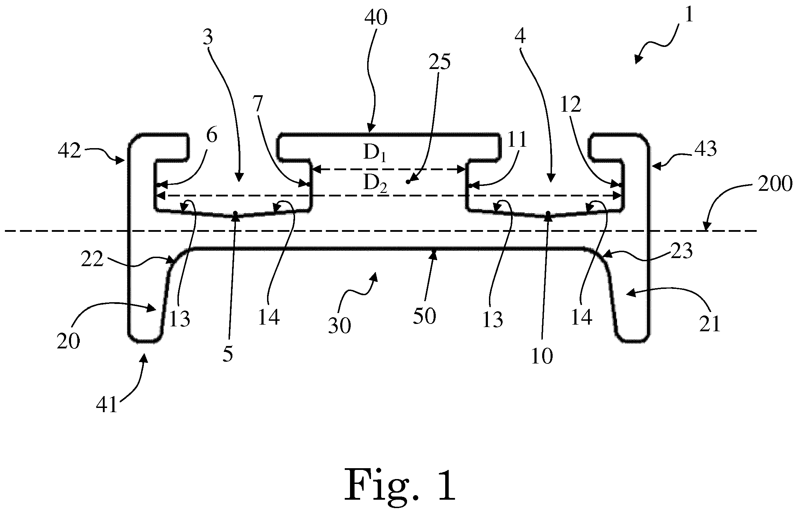

Each one of the bottom portions 5 and 10 consists of two substantially straight tracts 13 and 14 which form an angle less than 180° between them; for example, the two tracts 13 and 14 form between them an angle between 155° and 178°, preferably between 160° and 175°, and more preferably between 165° and 172°. In the exemplary embodiments of figures 1-14, the illustrated angle between the two tracts 13 and 14 has a value of about 170°. The two straight tracts 13 and 14 allow to simplify the coupling between the slots 3 and 4 and the corresponding fixing means, especially T-shaped bolts.

The lateral wall 11 of the slot 4 is adjacent to the lateral wall 7 of the slot 3 along the transversal extension of the body with respect to the principal axis 100; the direction of such transversal extension of the body is depicted in the attached figures by an axis 200 which is transversal to the principal axis 100.

Preferably, the walls 11 and 12 of the slot 4 are substantially parallel to the walls 6 and 7 of the slot 3.

Advantageously, the body of the bus bar 1 according to the present disclosure, seen in the transversal cross-section, further comprises, on the side 41, at least one cavity 30 extending at least over a corresponding portion 25 of the body which extends between the lateral wall 7 of the slot 3 and the adjacent lateral wall 11 of the slot 4.

According to the exemplary embodiments illustrated in figures 1-14, the at least one cavity 30 is defined at least by two delimiting portions 20-21, 70-71, 71-72 of the body which are arranged substantially transversal with respect to the bottom portions 5, 10 of the slots 3 and 4, and by a base portion 50 interposed between such two delimiting portions 20-21, 70-71, 71-72. In practice, the extension of the cavity 30 along the transversal axis 200 is delimited by the two delimiting portions 20-21, 70-71, 71-72.

According to the exemplary embodiments illustrated in figures 1-4 and 10-13, the body of the bus bar 1 comprises, on the side 41, only one cavity 30 which further extends over at least a corresponding tract of the bottom portion 5 of the slot 3 and over at least a corresponding tract of the bottom portion 10 of the slot 4. According to the invention, the extension of the slot 30 along the transversal axis 200 is larger than the distance Di between the lateral wall 7 of the slot 3 and the adjacent lateral wall 11 of the slot 4.

In the exemplary embodiments illustrated in figures 1-3 and 10-13 the base portion 50 of the cavity 30 is substantially flat and arranged transversally with respect to the lateral walls 6, 7 of the slot 3 and the lateral walls 11, 12 of the slot 4; preferably, the base portion 50 is advantageously connected to the two transversal delimiting portions 20 and 21 by curved tracts 22 and 23 of the body of the bus bar 1.

According to the exemplary embodiment illustrated in figure 1, the delimiting portions 20 and 21 are disposed relative to the slots 3 and 4 in such a way that the delimited extension of the cavity 30 along the transversal axis 200 is narrower than or substantially equal to the maximum distance D₂ between the lateral wall 6 of the slot 3 and the lateral wall 12 of the slot 4.

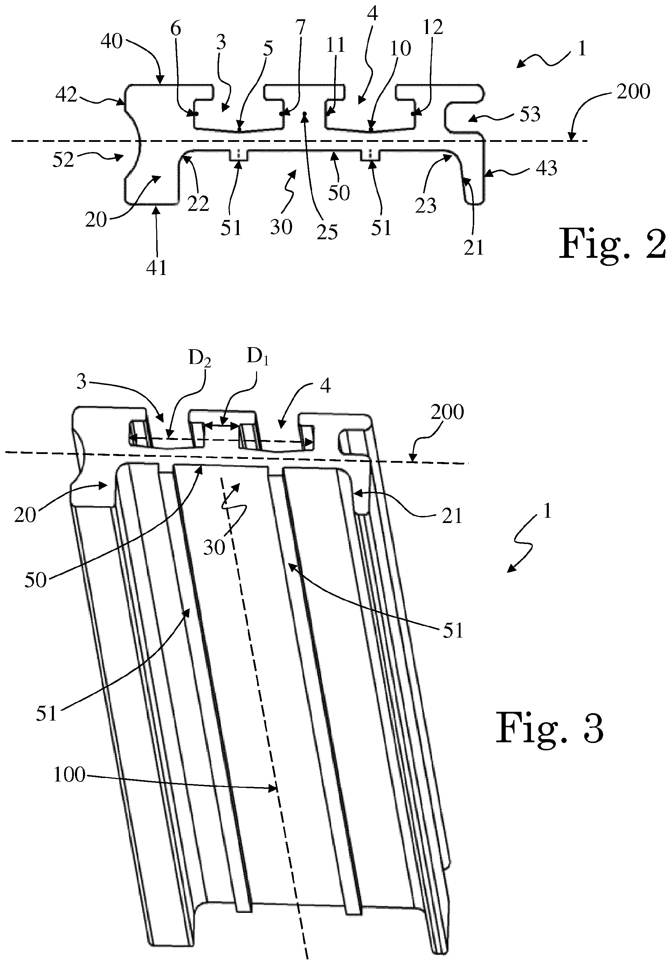

In the exemplary embodiments illustrated in figures 2-3 and 10-13 the delimiting portions 20 and 21 are disposed relative to the slots 3 and 4 in such a way that the delimited extension of the cavity 30 along the transversal axis 200 is larger than the maximum distance D₂; in practice, the cavity 30 extends further with respect to the slot 3 and to the slot 4 along the transversal axis 200.

According to the exemplary embodiment illustrated in figure 2, the body of the bus bar 1 comprises at least two strips 51 which protrude transversally from the base portion 50 and which are adapted to be used for coupling the bus bar 1 to other components and/or elements; for example, the strips 51 can provide bearing surfaces for a supporting element of the bus bar 1.

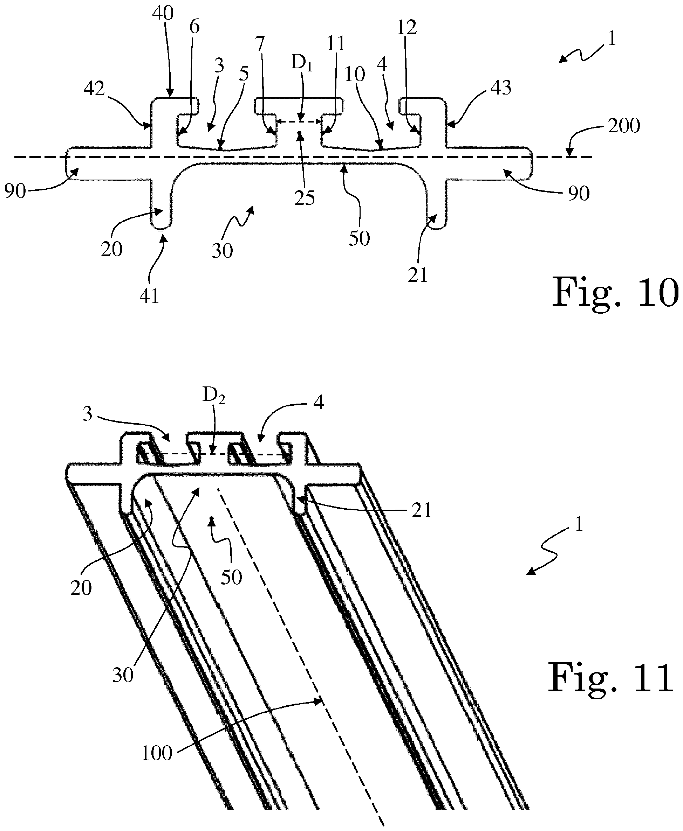

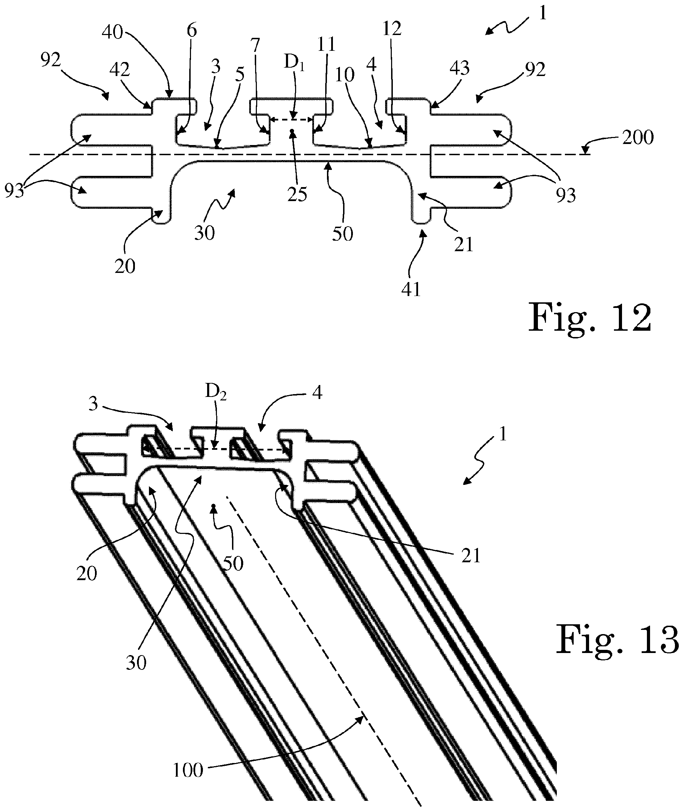

The bus bars 1 according to the exemplary embodiment illustrated in figure 1 is particularly adapted for carrying a nominal current of about 1250 A; the bus bar 1 according to the exemplary embodiment illustrated in figures 2-3 is particularly adapted for carrying a nominal current of about 1400 A; the bus bar 1 according to the exemplary embodiment illustrated in figures 10-11 is particularly adapted for carrying a nominal current of about 1100 A; and the bus bar 1 according to the exemplary embodiment illustrated in figures 12-13 is particularly adapted for carrying a nominal current of about 1250 A.

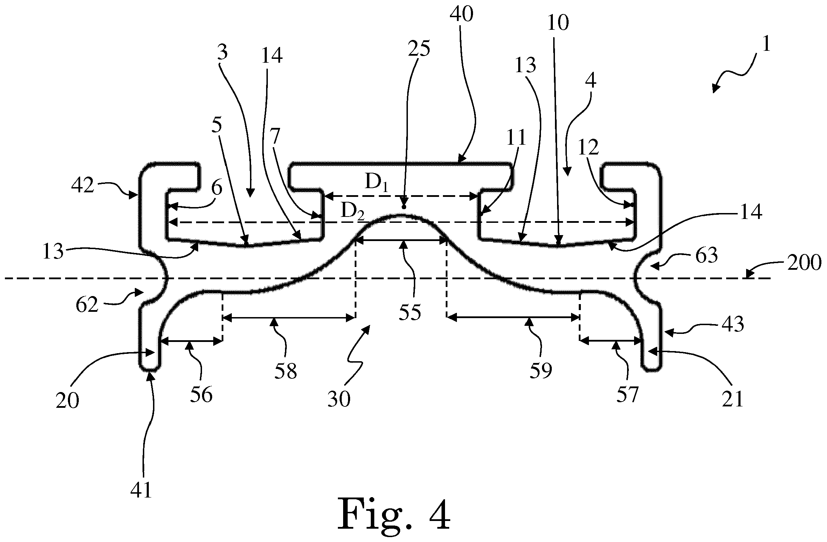

According to the exemplary embodiment illustrated in figure 4, the base portion 50 of the cavity 30 advantageously comprises at least a curved tract 55 which extends over the corresponding portion 25 of the body of the bus bar 1.

In the example illustrated in figure 4, such first curved tract 55 is concave and the base portion 50 further comprises: a second curved concave tract 56 connected to the delimiting portion 20; a third curved concave tract 57 connected to the delimiting portion 21; a curved convex tract 58 connecting the curved concave tracts 55 and 56 to each other; and a curved convex portion 59 connecting the curved concave tracts 55 and 57 to each other.

The delimiting portions 20 and 21 of the bus bar 1 illustrated in figure 4 are disposed relative to the slots 3 and 4 in such a way that the delimited extension of the cavity 30 along the transversal axis 200 is larger than the maximum distance D₂ between the lateral wall 6 of the slot 3 and the lateral wall 12 of the slot 4.

This bus bar 1 illustrated in figure 4 is particularly adapted for carrying a nominal current of about 1150 A.

The cavity 30 of the bus bar 1 according to the present disclosure can be advantageously defined in such a way to extend over the corresponding portion 25 of the body and between the lateral wall 7 of the slot 3 and the adjacent lateral wall 11 of the slot 4. For example, in the bus bar 1 illustrated in figure 4 the curved concave tract 55 of base portion 50 is defined in such a way that the cavity 30 extends over the corresponding portion 25 of the body and partially extends between the lateral wall 7 of the slot 3 and the adjacent lateral wall 11 of the slot 4.

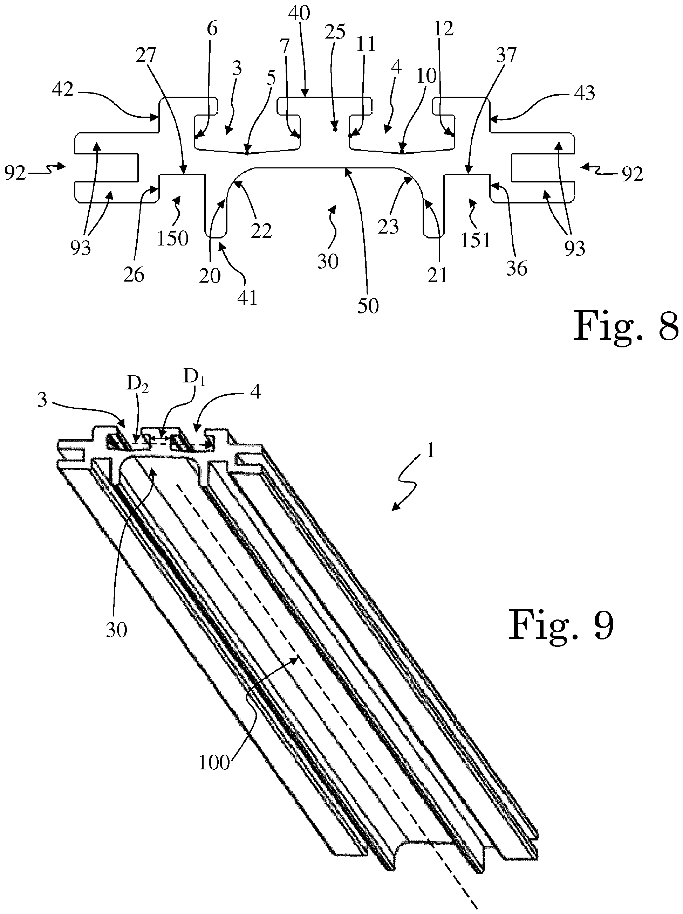

According to the exemplary embodiments illustrated in figures 8-9, in addition to the at least one cavity 30, the body of the bus bar 1 has, on side 41, at least one further cavity 150 and at least one further cavity 151, wherein the at least one cavity 30 is defined between the further cavities 150 and 151. Preferably, the at least one further cavity 150 extends over at least a corresponding tract of the bottom portion 5 of the slot 3, and the at least one further cavity 151 extends over at least a corresponding tract of the bottom portion 10 of the slot 4.

In the exemplary embodiments illustrated in figures 8-9, the body has, on side 41, only one cavity 30 defined between one cavity 150 and one cavity 151.

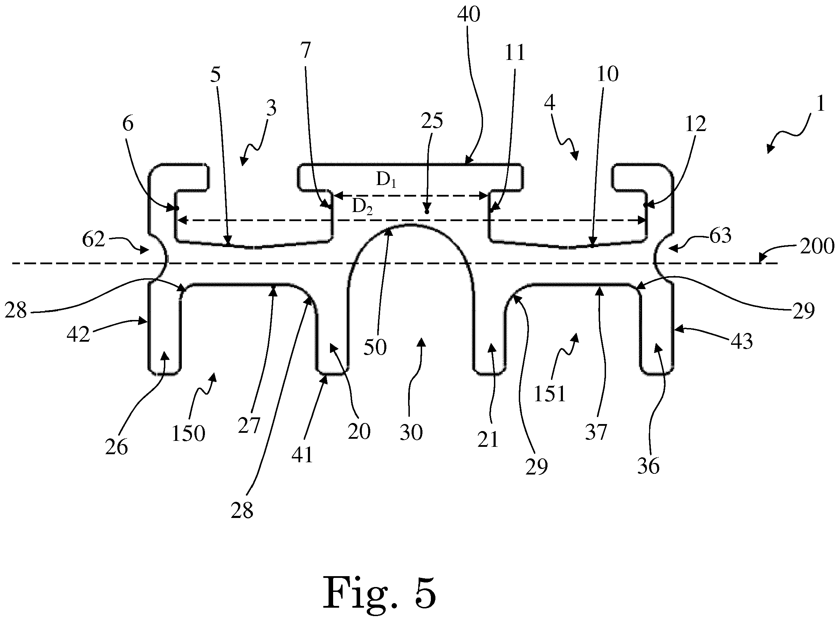

In the bus bar 1 not of the invention illustrated for example in figure 5, the cavity 30 extends over the corresponding portion 25 of the body of the bus bar 1; in particular, the two delimiting portions 20 and 21 of the bus bar 1 are positioned relative to the slots 3 and 4 in such a way that the delimited extension of the slot 30 along the transversal axis 200 is narrower than the distance Di between the lateral wall 7 of the slot 3 and the adjacent lateral wall 11 of the slot 4.

The base portion 50 of the illustrated cavity 30 is a curved concave portion 50 which connects the two delimiting portions 20 and 21 to each other; in particular, such curved portion 50 is defined in such a way that the cavity 30 extends partially between the lateral wall 7 of the slot 3 and the adjacent lateral wall 11 of the slot 4.

The cavity 150 extends over the bottom portion 5 of the slot 3. In particular, the cavity 150 is delimited by: the delimiting portion 20 (the same delimiting also the cavity 30); a further delimiting portion 26 of the body which is arranged substantially transversal with respect to the bottom portion 5 of the slot 3; a substantially flat base wall 27; and two curved portions 28 which connects the base wall 27 to the delimiting portions 20 and 26.

The cavity 151 extends over the bottom portion 10 of the slot 4. In particular, the cavity 151 is delimited by: the delimiting portion 21 (the same delimiting also the cavity 30); a further delimiting portion 36 of the body which is arranged substantially transversal with respect to the bottom portion 10 of the slot 4; a substantially flat base 37; and two curved portions 29 which connect the flat base 37 to the delimiting portions 21 and 36.

The bus bar 1 illustrated in figure 5 is particularly adapted for carrying a nominal current in the range of about 1350 A.

In the exemplary embodiment illustrated in figures 8 and 9, the cavity 30 extends further over a corresponding tract of the bottom portion 5 of the slot 3 and over a corresponding tract of the bottom portion 10 of the slot 4. In particular, the two delimiting portions 20 and 21 of the bus bar 1 are positioned relative to the slots 3 and 4 in such a way that the delimited extension of the slot 30 along the transversal axis 200 is larger than the distance Di between the lateral wall 7 of the slot 3 and the adjacent lateral wall 11 of the slot 4, and narrower than the distance D₂ between the lateral wall 6 of the slot 3 and the lateral wall 12 of the slot 4.

The base portion 50 of the illustrated cavity 30 is substantially flat and advantageously connected to the delimiting portions 20 and 21 by the two curved tracts 22 and 23 of the body of the bus bar 1.

The cavity 150 of the bus bar 1 illustrated in figures 8 and 9 is delimited by: the transverse portion 20 (the same delimiting also the cavity 30); a further delimiting portion 26 of the body which is arranged substantially transversal with respect to the bottom portion 5 of the slot 3; and a substantially flat base wall 27 connecting the delimiting portions 20 and 26 to each other.

The cavity 151 is delimited by: the transverse portion 21 (the same delimiting also the cavity 30); a further delimiting portion 36 of the body which is arranged substantially transversal with respect to the bottom portion 10 of the slot 4; and a substantially flat base 37 connecting the delimiting portions 21 and 36 to each other.

The bus bar 1 illustrated in figures 8 and 9 is particularly adapted for carrying a nominal current in the range of about 1600 A.

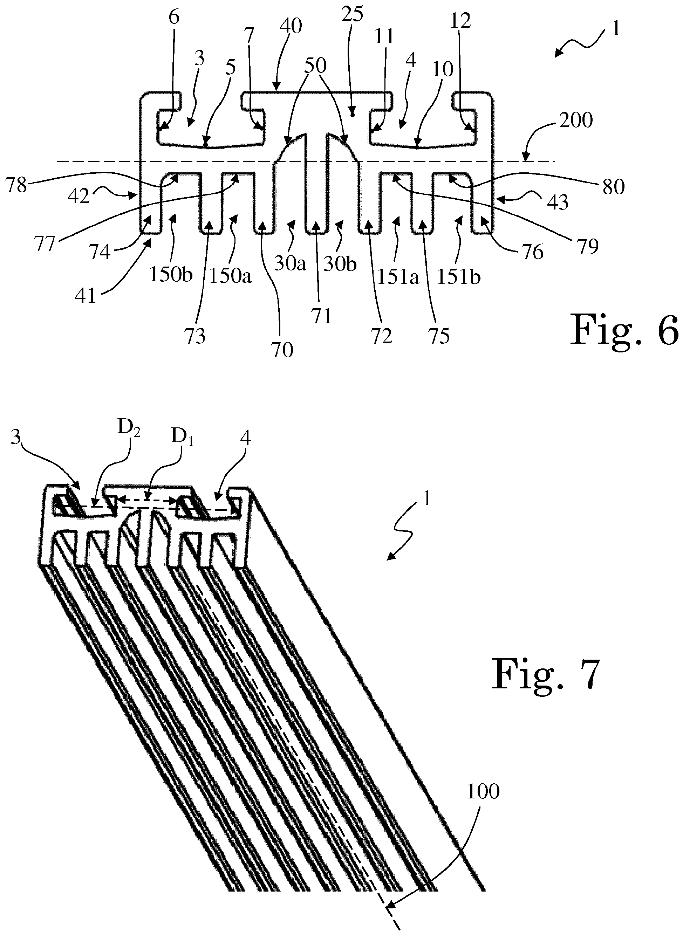

According to the embodiment not of the invention illustrated in figures 6 and 7, the at least one cavity 30 of the bus bar 1 advantageously comprises a plurality of cavities 30a, 30b which are defined between corresponding spaced fins 70, 71, 72 of the body of the bus bars 1; these spaced fins 70, 71, 72 are arranged substantially transversal with respect to the bottom portions 5 and 10 of the slots 3 and 4 and are preferably parallel to each other.

Preferably, the at least one further cavity 150 advantageously comprises a plurality of cavities 150a, 150b which are defined between corresponding spaced fins 70, 73, 74 of the body of the bus bar 1; theses fins 70, 73, 74 are arranged substantially transversal with respect to the bottom portion 5 of the slot 3 and are preferably parallel to each other. The at least one further cavity 151 advantageously comprises a plurality of cavities 151a, 151b which are defined between corresponding spaced fins 72, 75, 76 of the body of the bus bar 1; these fins 72, 75, 76 are arranged substantially transversal with respect to the bottom portion 10 of the slot 4 and are preferably parallel to each other.

The bus bar 1 illustrated for example in figures 6-7 comprises two cavities 30a, 30b defined between the three spaced and parallel fins 70, 71, 72.

In particular, the cavity 30a is delimited by: the fin 70, the fin 71 disposed adjacent to the fin 70 along the transversal axis 200, and the base portion 50 connecting transversally the two adjacent fins 70, 71. The cavity 30b is delimited by: the fin 71, the fin 72 disposed adjacent to the fin 71 along the transversal axis 200, and the base portion 50 connecting transversally the two adjacent fins 71, 72.

Advantageously, the base portion 50 of each one of the cavities 30a and 30b is curved; in particular, the base portion 50 of the cavity 30a has a concavity facing the cavity 30b, and the base portion 50 of the cavity 30b has a concavity facing the cavity 30a.

These curved base portions 50 are defined in such a way that the cavities 30a and 30b extend partially between the lateral wall 7 of the slot 3 and the adjacent lateral wall 11 of the slot 4. Furthermore, the bus bar 1 illustrated in figures 6 and 7 comprises: the two cavities 150a, 150b defined between the three spaced and parallel fins 70, 73 and 74; and the two cavities 151a, 151b defined between the three spaced and parallel fins 72, 75 and 76.

In particular, the cavity 150a is delimited by: the fin 70 (the same also delimiting the cavity 30a), the fin 73 disposed adjacent to the fin 70 along the transversal axis 200, and the base wall 77 connecting the adjacent fins 70 and 73 to each other. The cavity 150b is delimited by: the fin 73, the fin 74 disposed adjacent to the fin 73 along the transversal axis 200, and the base wall 78 connecting the adjacent fins 73 and 74 to each other.

The cavity 151a is delimited by: the fin 72 (the same also delimiting the cavity 30b), the fin 75 disposed adjacent to the fin 72 along the transversal axis 200, and the base wall 79 connecting the adjacent fins 72 and 75 to each other. The cavity 151b is delimited by: the fin 75, the fin 76 disposed adjacent to the fin 75 along the transversal axis 200, and the base wall 80 connecting the adjacent fins 75 and 76 to each other.

Even if in the embodiment illustrated in figures 6-7 the body of the bus bar 1 comprises the seven spaced fins 70-76 for defining the six cavities 30a, 30b, 150a, 150b, 151a, 151b on the side 41, it is to be set forth that the number of spaced fins, and hence the number of cavities defined between such fins, can be different with respect to the illustrated one. For example, the number of cavities 30 and/or of cavities 150 and/or cavities 151 can be greater that two, e.g. the body of the bus bar 1 can have, on side 41, three or more cavities 30 and/or three or more cavities 150 and/or three or more cavities 151 defined between corresponding spaced fins.

The bus bar 1 illustrated in figures 6 and 7 is particularly adapted for carrying a nominal current in the range of about 1800 A.

According to the exemplary embodiments illustrated in figures 2-5, at least one of the side 42 and the side 43 of the body of the bus bar 1 advantageously comprises a recess. In particular, the body of the bus bar 1 illustrated in figure 2 comprises, on side 42 and on side 43, recesses 52 and 53, respectively, and the body of the bus bars 1 illustrated in figures 4 and 5 has, on sides 42 and on side 43, recesses 62 and 63, respectively.

According to the exemplary embodiments illustrated in figures 8-14, the body of the bus bar 1 comprises a first coupling portion and a second coupling portion which protrude from the side 42 and the side 43, respectively, and which are adapted to couple the bus bar 1 to associable components and or elements, such as an insulating supporting element 500 for the bus bar 1.

In the exemplary embodiment illustrated in figure 10, the first coupling portion of the bus bar 1 comprises a single tab 90 which transversally protrudes from the side 42 of the body, so as to be arranged substantially transversally with respect to the lateral walls 6, 7 of the slot 3; the second coupling portion comprises a single tab 90 which transversally protrudes from the side 43 of the body so as to be arranged substantially transversally with respect to the lateral walls 11 and 12 of the slot 4.

In particular, the tabs 90 are adapted to be inserted into corresponding slots defined in the insulating supporting elements 500.

In the exemplary embodiments illustrated in figures 8-9 and 12-14, each one of the first coupling portion and the second coupling portion comprises a fork portion 92 adapted to receive therein a corresponding coupling portion of the insulating supporting element 500; in particular, the fork portion 92 is defined by two spaced and parallel tabs 93 which are arranged substantially transversal with respect to the lateral walls 6, 7 of the slot 3 and to the lateral walls 11, 12 of the slot 4.

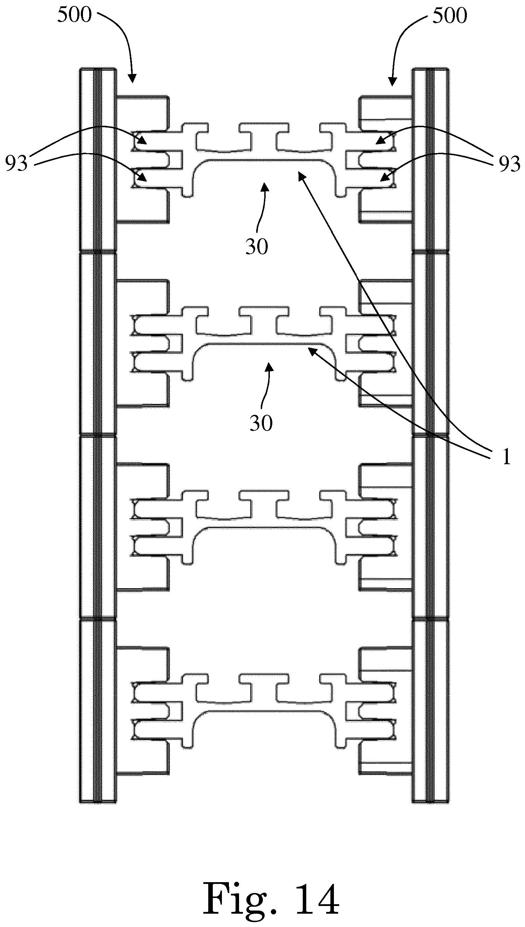

For example, in figure 14 are illustrated four bus bars 1, each one coupled with two corresponding insulating support elements 500. In particular, each of the fork portions 92 has its tabs 93 inserted into two slots of the corresponding insulating element 500.

In practice, it has been seen how the bus bar 1 according to the present disclosure allows achieving the intended object offering some improvements over known solutions.

In particular, with respect to know bus bars, the presence of at least one slot 30 on side 41 of the body of the bus bar 1 means a reduction of the conductive material, at least over a portion of the body extending between the lateral wall 7 of the slot 3 the adjacent lateral wall 11 of the slot 4. Experimental tests have demonstrated that this reduction of conducting material improves the heat dissipation capability of the bus bar 1.

The experimental tests have also demonstrated that this reduction of conducting material does not jeopardize the current conducting capability of the bus bar 1; indeed, an improved heat dissipation of the bus bar 1 means less losses for the electrical current flowing therethrough. For this reason, a relevant increasing of the heat dissipation can even improve the current conducting capability, meaning that the bus bar 1 can conduct nominal currents greater that the currents conducted by known bus bars, even having a reduced amount of conducting material with respect to such known bus bars.

Furthermore, the reduction of conducting material means a reduction of the weight and of the production costs of such bus bar 1.

With reference to the above described exemplary embodiments, the heat dissipation of the bus bar 1 is particularly improved by having one cavity 30 largely transversally extending along the axis 200 (at least over the corresponding portion 25 of the body of the bus bar 1 and further over the bottom portions 5 and 10 of the slots 3 and 4, as illustrated for example in figures 1-4 and 8-13) and/or extending partially between the lateral wall 7 of the slot 3 and the adjacent lateral wall 11 of the slot 4 (as illustrated for example in figure 4, 5 and 7).

In particular, the configuration of the cavity 30 according to the exemplary embodiment illustrated in figure 4 results in a particularly relevant reduction of conducting material in the bus bar 1 and, hence, in high heat dissipation performances.

Alternatively, the heat dissipation can be particularly improved by providing the side 41 of the bus bar 1 with further cavities 150, 151, in addition to at least one cavity 30 (as illustrated for example in figures 5-9).

In particular, the bus bar 1 illustrated for example in figures 6 and 7 has relevant heat dissipation performances due to the reduction of material and the large outer surface provided by the spaced fins 70-76.

The heat dissipation can be further increased by having the cavity 30 with at least one curved tract, because the curvature of such tract increases the outer surface of the bus bar 1. For example, the cavity 30 of the bus bars 1 illustrated in figures 1-3 and 8-13 comprises the two curved tracts 22 and 23; the cavity 30 of the bus bar 1 illustrated in figure 4 comprises the curved tracts 55-59; the cavity 30 of the bus bar 1 illustrated in figure 5 comprises the curved portion 50; and each of the cavities 30a and 30b of the bus bar 1 illustrated in figure 6 comprises the curved portion 50.

The heat dissipation can be further increased by having at least one recess defined in the side 42 and/or in the side 43 of the body of the bus bar 1, since such recess increases the outer surface of the bus bar 1 (see for example the bus bars 1 illustrated in figures 3-5).

Furthermore, considering two bus bars 1 according to the above described embodiments placed adjacent to each other, the reduction of conducting material on side 41 of the bus bar 1, due at least to the cavity 30, reduces the magnetic forces applied to the bus bars 1 during the current flowing. In particular, the presence of a largely extending cavity 30 (see the exemplary embodiments of figures 1-4, 10-13) or of a plurality of cavities 30, 150, 151 (see the exemplary embodiments of figures 5-9) on the side 41 of the bus bars 1 better distributes the magnetic fields generated between the bus bars 1, directing them towards the outside of the bus bars 1.

This reduction of the magnetic forces allows the bus bars 1 to bear rated short-time currents having a value greater with respect to known bus bars and, therefore, allows the reduction of the number and the dimensions of the supporting elements associated to the bus bars 1.

The bus bar 1 thus conceived is particularly adapted for being installed in power distribution switchboards, especially for low voltage applications (i.e. applications with a voltage up to 1000 V).

Such switchboards comprise a plurality of switching devices, such as circuit breakers or other switching devices, which are electrically connected to corresponding bus bars, at least one of which can be provided according to the above-described embodiments.

## Claims

1. A bus bar (1) for electric power distribution, comprising a body made of conducting material which longitudinally extends along a principal axis (100) and which, seen in a transversal cross-section, has a first side (40) and a second side (41) transversally connected to each other by a third side (42) and a fourth side (43), said body having, on said first side (40), at least a first slot (3) and a second slot (4) which are separated from each other and adapted for coupling with corresponding fixing means, said first slot having a first bottom portion (5) from which a first lateral wall (6) and a second lateral wall (7) protrude transversally facing to each other, and said second slot (4) having a second bottom portion (10) from which a third lateral wall (11) and a fourth lateral wall (12) protrude transversally facing to each other, wherein said third lateral wall (11) is adjacent to said second lateral wall (7) along a transversal extension (200) of the body with respect to said principal axis (100), wherein said body has, on said second side (41), at least one cavity (30) extending at least over a corresponding portion (25) of the body which extends between said second lateral wall (7) and said third lateral wall (11) with an extension along a transversal axis (200) which is larger than the distance (D₁) between said second lateral wall (7) and said third lateral wall (12), **characterized in that** the at least one cavity (30) is defined by two delimiting portions (20, 21) of the body which are arranged substantially transversal with respect to the bottom portions (5, 10) of the slots (3) and (4), and by a base portion (50) interposed between such two delimiting portions (20, 21), and **in that** each of said first bottom portion (5) and said second bottom portion (10) consists of two substantially straight tracts (13, 14) which form an angle of less than 180° between them.

2. The bus bar (1) according to claim 1, wherein said at least one cavity (30) further extends over at least a corresponding tract of said first bottom portion (5) and over at least a corresponding tract of said second bottom portion (10).

3. The bus bar (1) according to one or more of the preceding claims, wherein said body has, on said second side (41), at least one further first cavity (150) and at least one further second cavity (151), wherein said at least one cavity (30) is defined between said at least one further first cavity (150) and said at least one further second cavity (151).

4. The bus bar (1) according to claim one or more of the preceding claims, wherein said base portion (50) is substantially flat and arranged transversally with respect to said first, second, third and fourth lateral walls (6, 7, 11, 12).

5. The bus bar (1) according to one or more of claims 1-4, wherein said base portion (50) is connected to said two delimiting portions (20-21) by curved tracts (22, 23) of the body.

6. The bus bar (1) according to one or more of claims 1-3, wherein said base portion (50) comprises at least a first curved tract (50, 55) which extends over said corresponding portion (25) of the body.

7. The bus bar (1) according to claim 6, wherein said first curved tract (55) is concave and said base portion (50) further comprises:
- a second curved concave tract (56) and a third curved concave tract (57) which are each connected to a corresponding one of said two delimiting portions (20, 21) of the body;
- a first curved convex tract (58) connecting said first and second curved concave tracts (55, 56) to each other; and
- a second curved convex tract (59) connecting said first and third curved concave tracts (55, 57) to each other.

8. The bus bar (1) according to one or more of the preceding claims, wherein said body comprises a first coupling portion (90, 92) and a second coupling portion (90, 92) protruding from said said third side (42) and said fourth side (43), respectively, said first and second coupling portions being adapted to couple the bus bar (1) to associable elements and/or components (500).

9. The bus bar (1) according to claim 8, wherein at least one of said first and second coupling portions comprises a fork portion (92) adapted to be coupled to a supporting insulating element (500) for the bus bar (1).

10. The bus bar (1) according to one or more of the preceding claims, wherein at least one of said third side (42) and fourth side (43) comprises a recess (52, 53, 62, 63).

11. An electrical power distribution switchboard **characterized in that** it comprises at least one bus bar (1) according to one or more of the preceding claims 1-10.

## Patentansprüche

1. Sammelschiene (1) zur Stromverteilung, umfassend einen Körper aus leitendem Material, der sich in Längsrichtung entlang einer Hauptachse (100) erstreckt und der im Querschnitt gesehen eine erste Seite (40) und eine zweite Seite (41) aufweist, die durch eine dritte Seite (42) und eine vierte Seite (43) quer miteinander verbunden sind, wobei der Körper auf der ersten Seite (40) mindestens einen ersten Schlitz (3) und einen zweiten Schlitz (4) aufweist, die voneinander getrennt sind und zum Koppeln mit entsprechenden Befestigungsmitteln angepasst sind, wobei der erste Schlitz einen ersten Bodenabschnitt (5) aufweist, von dem eine erste Seitenwand (6) und eine zweite Seitenwand (7) quer zueinander vorstehen, und der zweite Schlitz (4) einen zweiten Bodenabschnitt (10) aufweist, von dem eine dritte Seitenwand (11) und eine vierte Seitenwand (12) quer zueinander vorstehen,
wobei die dritte Seitenwand (11) an die zweite Seitenwand (7) entlang einer Querausdehnung (200) des Körpers in Bezug auf die Hauptachse (100) angrenzt, wobei der Körper auf der zweiten Seite (41) mindestens einen Hohlraum (30) aufweist, der sich mindestens über einen entsprechenden Abschnitt (25) des Körpers erstreckt, der sich zwischen der zweiten Seitenwand (7) und der dritten Seitenwand (11) mit einer Erstreckung entlang einer Querachse (200) erstreckt, die größer als der Abstand (D1) zwischen der zweiten Seitenwand (7) und der dritten Seitenwand (12) ist, **dadurch gekennzeichnet, dass** der mindestens eine Hohlraum (30) durch zwei Begrenzungsabschnitte (20, 21) des Körpers, die im Wesentlichen quer zu den Bodenabschnitten (5, 10) der Schlitze (3) und (4) angeordnet sind, und durch einen Bodenabschnitt (50), der zwischen diesen beiden Begrenzungsabschnitten (20, 21) angeordnet ist, definiert ist, und dass jeder des ersten Bodenabschnitts (5) und des zweiten Bodenabschnitts (10) aus zwei im Wesentlichen geraden Trakten (13, 14) besteht, die einen Winkel von weniger als 180° zwischen sich bilden.

2. Sammelschiene (1) gemäß Anspruch 1, wobei sich der mindestens eine Hohlraum (30) ferner über mindestens einen entsprechenden Trakt des ersten Bodenabschnitts (5) und über mindestens einen entsprechenden Trakt des zweiten Bodenabschnitts (10) erstreckt.

3. Sammelschiene (1) gemäß einem oder mehreren der vorhergehenden Ansprüche, wobei der Körper auf der zweiten Seite (41) mindestens einen weiteren ersten Hohlraum (150) und mindestens einen weiteren zweiten Hohlraum (151) aufweist, wobei der mindestens eine Hohlraum (30) zwischen dem mindestens einen weiteren ersten Hohlraum (150) und dem mindestens einen weiteren zweiten Hohlraum (151) definiert ist.

4. Sammelschiene (1) gemäß einem oder mehreren der vorhergehenden Ansprüche, wobei der Basisabschnitt (50) im Wesentlichen eben ist und quer zur ersten, zweiten, dritten und vierten Seitenwand (6, 7, 11, 12) angeordnet ist.

5. Sammelschiene (1) gemäß einem oder mehreren der Ansprüche 1-4, wobei der Basisabschnitt (50) mit den zwei Begrenzungsabschnitten (20-21) durch gekrümmte Trakte (22, 23) des Körpers verbunden ist.

6. Sammelschiene (1) gemäß einem oder mehreren der Ansprüche 1-3, wobei der Basisabschnitt (50) mindestens einen ersten gekrümmten Trakt (50, 55) umfasst, der sich über den entsprechenden Abschnitt (25) des Körpers erstreckt.

7. Sammelschiene (1) gemäß Anspruch 6, wobei der erste gekrümmte Trakt (55) konkav ist und der Basisabschnitt (50) ferner umfasst:
- einen zweiten gekrümmten konkaven Trakt (56) und einen dritten gekrümmten konkaven Trakt (57), die jeweils mit einem entsprechenden der zwei Begrenzungsabschnitte (20, 21) des Körpers verbunden sind,
- einen ersten gekrümmten konvexen Trakt (58), der den ersten und zweiten gekrümmten konkaven Trakt (55, 56) miteinander verbindet; und
- einen zweiten gekrümmten konvexen Trakt (59), der den ersten und dritten gekrümmten konkaven Trakt (55, 57) miteinander verbindet.

8. Sammelschiene (1) gemäß einem oder mehreren der vorhergehenden Ansprüche, wobei der Körper einen ersten Kopplungsabschnitt (90, 92) und einen zweiten Kopplungsabschnitt (90, 92) umfasst, die von der dritten Seite (42) bzw. der vierten Seite (43) vorstehen, wobei der erste und der zweite Kopplungsabschnitt dazu angepasst sind, die Sammelschiene (1) mit zuordenbaren Elementen und/oder Komponenten (500) zu koppeln.

9. Sammelschiene (1) gemäß Anspruch 8, wobei mindestens einer des ersten und zweiten Kopplungsabschnitts einen Gabelabschnitt (92) umfasst, der dazu angepasst ist, mit einem isolierenden Stützelement (500) für die Sammelschiene (1) gekoppelt zu werden.

10. Sammelschiene (1) gemäß einem oder mehreren der vorhergehenden Ansprüche, wobei mindestens eine der dritten Seite (42) und der vierten Seite (43) eine Ausnehmung (52, 53, 62, 63) umfasst.

11. Stromverteilertafel, **dadurch gekennzeichnet, dass** sie mindestens eine Sammelschiene (1) gemäß einem oder mehreren der vorhergehenden Ansprüche 1-10 umfasst.

## Revendications

1. Barre omnibus (1) de distribution d'énergie électrique, comportant un corps constitué de matériau conducteur qui s'étend longitudinalement suivant un axe principal (100) et qui, vu en coupe transversale, présente un premier côté (40) et un deuxième côté (41) reliés transversalement l'un à l'autre par un troisième côté (42) et un quatrième côté (43), ledit corps présentant, sur ledit premier côté (40), au moins une première rainure (3) et une deuxième rainure (4) qui sont séparées l'une de l'autre et prévues pour se coupler avec des moyens de fixation correspondants, ladite première rainure présentant une première partie (5) de fond à partir de laquelle une première paroi latérale (6) et une deuxième paroi latérale (7) font saillie transversalement l'une en face de l'autre, et ladite deuxième rainure (4) présentant une deuxième partie (10) de fond à partir de laquelle une troisième paroi latérale (11) et une quatrième paroi latérale (12) font saillie transversalement l'une en face de l'autre, ladite troisième paroi latérale (11) étant adjacente à ladite deuxième paroi latérale (7) le long d'une étendue transversale (200) du corps par rapport audit axe principal (100), ledit corps présentant, sur ledit deuxième côté (41), au moins une cavité (30) s'étendant au moins par-dessus une partie correspondante (25) du corps qui s'étend entre ladite deuxième paroi latérale (7) et ladite troisième paroi latérale (11) avec une étendue suivant un axe transversal (200) qui est plus grande que la distance (D₁) entre ladite deuxième paroi latérale (7) et ladite troisième paroi latérale (12), **caractérisé en ce que** la ou les cavités (30) sont définies par deux parties (20, 21) de délimitation du corps qui sont disposées sensiblement transversalement par rapport aux parties (5, 10) de fond des rainures (3) et (4), et par une partie (50) de base interposée entre lesdites deux parties (20, 21) de délimitation, et **en ce que** chacune parmi ladite première partie (5) de fond et ladite deuxième partie (10) de fond est constituée de deux tronçons (13, 14) sensiblement rectilignes qui forment un angle de moins de 180° entre eux.

2. Barre omnibus (1) selon la revendication 1, ladite ou lesdites cavités (30) s'étendant en outre par-dessus au moins un tronçon correspondant de ladite première partie (5) de fond et par-dessus au moins un tronçon correspondant de ladite deuxième partie (10) de fond.

3. Barre omnibus (1) selon une ou plusieurs des revendications précédentes, ledit corps présentant, sur ledit deuxième côté (41), au moins une première cavité supplémentaire (150) et au moins une deuxième cavité supplémentaire (151), ladite ou lesdites cavités (30) étant définies entre ladite ou lesdites premières cavités supplémentaires (150) et ladite ou lesdites deuxièmes cavités supplémentaires (151).

4. Barre omnibus (1) selon une ou plusieurs des revendications précédentes, ladite partie (50) de base étant sensiblement plate et disposée transversalement par rapport auxdites première, deuxième, troisième et quatrième parois latérales (6, 7, 11, 12).

5. Barre omnibus (1) selon une ou plusieurs des revendications 1 à 4, ladite partie (50) de base étant reliée auxdites deux parties de délimitation (20-21) par des tronçons incurvés (22, 23) du corps.

6. Barre omnibus (1) selon une ou plusieurs des revendications 1 à 3, ladite partie (50) de base comportant au moins un premier tronçon incurvé (50, 55) qui s'étend par-dessus ladite partie (25) correspondante du corps.

7. Barre omnibus (1) selon la revendication 6, ledit premier tronçon incurvé (55) étant concave et ladite partie (50) de base comportant en outre :
- un deuxième tronçon concave incurvé (56) et un troisième tronçon concave incurvé (57) dont chacun est relié à une partie correspondante desdites deux parties (20, 21) de délimitation du corps ;
- un premier tronçon convexe incurvé (58) reliant lesdits premier et deuxième tronçons concaves incurvés (55, 56) l'un à l'autre ; et
- un deuxième tronçon convexe incurvé (59) reliant lesdits premier et troisième tronçons concaves incurvés (55, 57) l'un à l'autre.

8. Barre omnibus (1) selon une ou plusieurs des revendications précédentes, ledit corps comportant une première partie (90, 92) de couplage et une deuxième partie (90, 92) de couplage qui font saillie à partir dudit troisième côté (42) et dudit quatrième côté (43), respectivement, lesdites première et deuxième parties de couplage étant prévues pour coupler la barre omnibus (1) à des éléments et/ou composants (500) susceptibles d'être associés.

9. Barre omnibus (1) selon la revendication 8, au moins une desdites première et deuxième parties de couplage comportant une partie (92) en fourche prévue pour être couplée à un élément isolant (500) d'appui pour la barre omnibus (1).

10. Barre omnibus (1) selon une ou plusieurs des revendications précédentes, au moins un côté parmi ledit troisième côté (42) et ledit quatrième côté (43) comportant un évidement (52, 53, 62, 63).

11. Tableau de distribution d'énergie électrique **caractérisé en ce qu'**il comporte au moins une barre omnibus (1) selon une ou plusieurs des revendications 1 à 10 qui précèdent.
